# EUROPÄISCHE PATENTSCHRIFT

(11) **EP 3 219 000 B1**
(45) Veröffentlichungstag und Bekanntmachung des Hinweises auf die Patenterteilung: **06.11.2019**
(21) Anmeldenummer: 15760480.2
(22) Anmeldetag: 11.09.2015
(51) Int. Cl.: H02K 17/16, H02K 1/16, H02K 1/26

(54) **ELEKTRISCHE MASCHINE**
ELECTRIC MACHINE
MACHINE ÉLECTRIQUE

(30) Priorität: 13.11.2014 DE 102014223193; 02.02.2015 DE 102015201731
(43) Veröffentlichungstag der Anmeldung: 20.09.2017
(73) Patentinhaber: Robert Bosch GmbH, 70442 Stuttgart (DE)
(72) Erfinder: KELLETER, Arndt, 71729 Erdmannhausen (DE); RUIZ DE LARRAMENDI, Miguel, 71638 Ludwigsburg (DE); ALEXANDER, Marcus, 71640 Ludwigsburg (DE); HERRANZ GRACIA, Mercedes, 91301 Forchheim (DE); HEUSER, Patrick, 70372 Stuttgart (DE)
(86) Internationale Anmeldenummer: PCT/EP2015/070789
(87) Internationale Veröffentlichungsnummer: WO 2016/074828

(56) Entgegenhaltungen:
- EP-A2- 2 202 871
- CN-A- 1 980 015
- CN-Y- 201 113 576
- US-A- 5 045 742
- US-A- 5 804 896
- US-B2- 8 154 167

## Beschreibung

### Technisches Gebiet

Die Erfindung betrifft elektrische Maschinen, insbesondere Asynchronmaschinen. Insbesondere betrifft die vorliegende Erfindung Maßnahmen zur Erhöhung der Leistung bei Maximaldrehzahl von Asynchronmaschinen.

### Stand der Technik

Elektrische Maschinen weisen generell einen Stator und einen Läufer auf. Bei Asynchronmaschinen umfasst der Stator eine Statorwicklung, durch die ein umlaufendes Statormagnetfeld erzeugt wird. Das umlaufende Statormagnetfeld bewegt sich mit einer Drehzahl, die dem Quotienten der Grundfrequenz des ansteuernden Systems und der Polpaarzahl der elektrischen Maschine entspricht.

Im Gegensatz zu Synchronmaschinen umfasst der Läufer bei Asynchronmaschinen kurzgeschlossene Leiter. Sobald die mechanische Drehzahl des Läufers von der Synchrondrehzahl abweicht, ändert sich der magnetische Fluss durch die kurzgeschlossenen Leiter, so dass darin Ströme induziert werden. Die induzierten Ströme bewirken ein Erregermagnetfeld, das mit dem Statormagnetfeld wechselwirkt und dadurch ein Drehmoment erzeugt.

Asynchronmotoren haben gegenüber Synchronmotoren den Vorteil, dass keine Permanentmagnete benötigt werden.Sie werden daher aufgrund der hohen Zuverlässigkeit und des hohen Wirkungsgrades im fahrzyklusrelevanten Bereich als Traktionsmotoren für elektromotorisch betriebene Kraftfahrzeuge, Zugmaschinen und dergleichen häufig verwendet.

In der Druckschrift US 8,154,167 B2 ist eine hocheffiziente Asynchronmaschine mit einer hohen Momentendichte und einer hohen maximalen Drehzahl beschrieben, wobei die Statorjochdicke zwischen 30% und 70% größer ist als die Statorzahnlänge und die Rotorjochdicke zwischen 30% und 70% größer ist als die Rotorzahnlänge.

Die Druckschrift EP 2 202 871 A2 offenbart eine elektrische Maschine mit einem Stator, wobei das Verhältnis einer Statorjochdicke zur Statorzahnbreite mindestens 5:1 und das Verhältnis einer Läuferjochdicke zur Rotorzahnbreite mindestens 5:1 betragen kann.

Die Druckschrift CN 1 980 015 A offenbart eine Asynchronmaschine, wobei ein Verhältnis der Jochhöhe in radialer Richtung zu einer Nuthöhe im Rotor zwischen 1,26 und 1,39 beträgt.

Die Druckschrift US 5 804 896 A offenbart eine Synchronmaschine, wobei ein Verhältnis der Jochhöhe in radialer Richtung zu einer Nuthöhe im Stator gleich 2,227 ist.

Asynchronmotoren benötigen funktionsbedingt eine gute elektromagnetische Kopplung zwischen dem Stator und dem Läufer. Der Anteil des magnetischen Flusses, der nicht durch den Stator und den Läufer verkettet wird, wird Streufluss genannt und reduziert das erreichbare Drehmoment der elektrischen Maschine. Die Verringerung des erreichbaren Drehmoments ist besonders hoch, wenn die elektrische Maschine an einer Spannungsgrenze und mit maximalem Drehmoment betrieben wird. Dies tritt insbesondere bei Traktionsmotoren bei hohen Motordrehzahlen auf. Dann reduziert die Streuung des magnetischen Flusses das erreichbare Drehmoment bei hohen Drehzahlen, so dass hohe Fahrzeuggeschwindigkeiten bei zum Beispiel starkem Windwiderstand oder an Steigungen nicht gehalten werden können oder Beschleunigungsvorgänge verlängert werden.

Es ist daher Aufgabe der vorliegenden Erfindung, eine elektrische Maschine bereitzustellen, die eine möglichst hohe Leistung bei hohen Drehzahlen aufweist, ohne verschlechterte Eigenschaften in anderen Betriebsbereichen zu erhalten.

### Offenbarung der Erfindung

Diese Aufgabe wird durch eine Asynchronmaschine gemäß Anspruch 1 gelöst.

Weitere Ausgestaltungen sind in den abhängigen Ansprüchen angegeben.

Gemäß einem Aspekt ist eine elektrische Asynchronmaschine, insbesondere eine Induktionsmaschine, vorgesehen, umfassend:
- einen zylindrischen Stator mit an einem Statorjoch angeordneten Statorzähnen;
- einen zylindrischen Läufer mit an einem Läuferjoch angeordneten Läuferpolen, die durch Kurzschlusswicklungen in einem Läuferkörper definiert sind,
wobei ein Verhältnis einer Jochhöhe des Statorjochs in radialer Richtung zu einer Nuthöhe der Statornuten in radialer Richtung zwischen 1,75 und 2,5 beträgt und/oder ein Verhältnis der Jochhöhe des Läuferkörpers in radialer Richtung zu einer Nuthöhe der Läufernuten in radialer Richtung zwischen 2 und 2,75 beträgt.

Die obige Asynchronmaschine ist so dimensioniert, dass eine besonders gute elektromagnetische Kopplung zwischen Stator und Läufer erreicht wird. Insbesondere wird der Streufluss durch eine Auslegung der Nutgeometrie deutlich reduziert. Die Nutstreuung ist umso geringer, je kürzer und breiter eine Nut ist. Ist die Nut jedoch breit, wird der Querschnitt der Zähne, die den magnetischen Fluss führen sollen, verringert. Dies kann dazu führen, dass das maximale Drehmoment bei geringen Drehzahlen reduziert wird. Die obige Asynchronmaschine entspricht einer Auslegung, bei der die Nutstreuung reduziert ist, jedoch das maximale Drehmoment bei geringen Drehzahlen nicht beeinträchtigt ist. Weiterhin ermöglichen die durch die obige Auslegung angegebenen kurzen Nuten eine Erhöhung der Jochbreite, was wiederum zu einer magnetischen Entlastung des Joches führt.

Angesichts der obigen Erkenntnisse ergibt sich dadurch ein Kompromiss zwischen der Jochhöhe und Nuthöhe des Stators bei einem Verhältnis zwischen 1,75 und 2,5 und/oder ein Verhältnis der Jochhöhe zur Nuthöhe im Läufer zwischen 2 und 2,75. Dadurch wird eine Reduzierung der Streuziffer der Asynchronmaschine um bis zu 50% gegenüber konventionellen Geometrien erreicht.

Es kann vorgesehen sein, dass ein Verhältnis der Nutbreiten des Bereichs der Statornut, der an einen Zahnkopf der Statornut angrenzt, zu der Nutbreite am Nutgrund zwischen 0,9 und 1,1 beträgt.

Gemäß einer Ausführungsform kann die Asynchronmaschine als dreiphasige Maschine ausgebildet sein.

Insbesondere kann die Asynchronmaschine mehrere Dreiphasensysteme umfassen, die zueinander um 0° oder 30° versetzt sind.

Die Kurzschlusswicklungen können in Aluminium, Kupfer oder einem Material mit noch höherer Leitfähigkeit ausgeführt sein.

Weiterhin kann der Läuferkörper durch Umspülen mit einem Kühlmedium, insbesondere Öl oder Luft, gekühlt sein.

### Kurzbeschreibung der Zeichnungen

Ausführungsformen werden nachfolgend anhand der beigefügten Zeichnungen näher erläutert. Es zeigen:
- Figur 1: eine Querschnittsdarstellung durch eine Asynchronmaschine mit verbesserter Leistung bei hohen Drehzahlen;

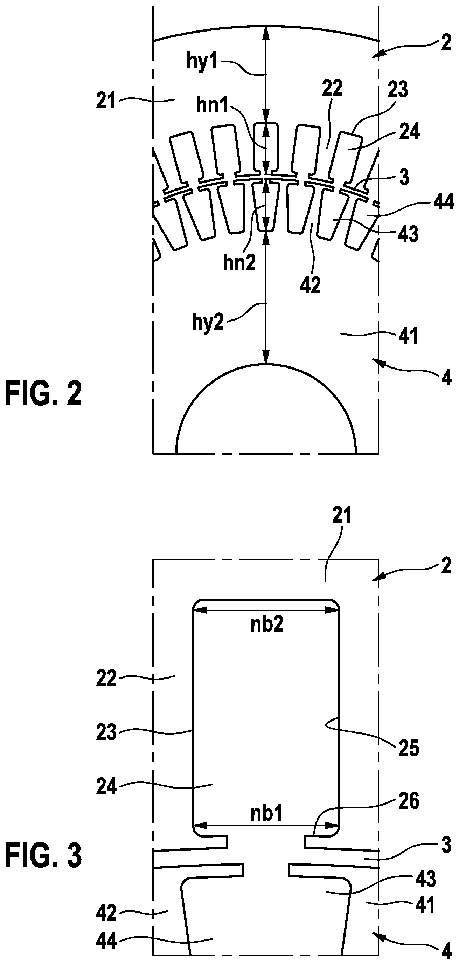

- Figur 2: einen Ausschnitt aus der Asynchronmaschine der Figur 1 zur Darstellung der Abmessungen des Läufers und des Stators;
- Figur 3: eine weitere Ausschnittsdarstellung aus der Asynchronmaschine der Figur 1 mit Darstellung der Abmessung einer Statornut.

### Beschreibung von Ausführungsformen

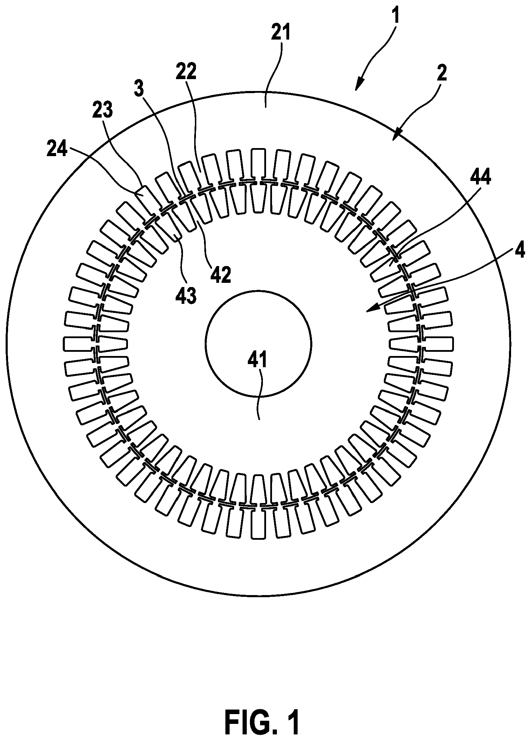

Figur 1 zeigt eine Querschnittsdarstellung durch eine rotatorische elektrische Maschine 1 mit einem Stator 2, der als Außenstator ausgebildet ist. Die elektrische Maschine ist als Asynchronmaschine, insbesondere Induktionsmaschine, als ausgebildet.

Der Stator 2 ist kreiszylindrisch und weist ein zylindrisches Statorjoch 21 und, sich an das Statorjoch 21 anschließende Statorzähne 22 auf. Die Statorzähne 22 stehen von dem Statorjoch 21 nach innen ab und definieren so eine kreiszylindrische Innenausnehmung 3.

Statornuten 23, die zwischen den Statorzähnen 22 gebildet sind, sind geeigneterweise mit (nicht dargestellten) Statorspulen 24 versehen, die bei entsprechender elektrischer Ansteuerung ein umlaufendes Statormagnetfeld erzeugen können.

In der kreiszylindrischen Innenausnehmung 3 ist ein im Wesentlichen kreiszylindrischer Läufer 4 in Form eines Innenläufers vorgesehen. Der Läufer weist einen Läuferkörper 41 auf. Der Läuferkörper 41 weist Läuferpole 42 auf, die zwischen in dem Läuferkörper 41 in Läuferrnuten 44 eingebetteten Kurzschlusswicklungen 43 vorgesehen sind. Die Kurzschlusswicklungen 43 können in den Läuferkörper direkt eingebettet sein, z.B. durch Eingießen, oder in den Läufernuten 44 des Läuferkörpers 41 eingelegt sein. Die Läuferwicklung kann auch eingesteckt werden.

Asynchronmaschinen benötigen funktionsbedingt eine gute elektromagnetische Kopplung zwischen Stator 2 und Läufer 4. Durch Streuflüsse, d.h. nicht durch Stator 2 und Rotor 2 verkettete magnetische Flüsse, wird das Drehmoment der Maschine reduziert. Die Reduzierung des Drehmoments tritt insbesondere dann auf, wenn die Maschine an einer Spannungsgrenze und mit maximalem Drehmoment betrieben wird. Dies wird durch Traktionsmaschinen, insbesondere bei hohen Motordrehzahlen, erreicht.

Während bei niedrigen Drehzahlen das maximale Drehmoment durch die thermischen und magnetischen Grenzen der für den Läufer verwendeten Materialien begrenzt wird, wird das maximale Drehmoment bei hohen Drehzahlen fast ausschließlich durch die magnetische Streuung begrenzt. Grundsätzlich ist es schwierig, eine magnetische Streuung im Bereich des an den axialen Enden angeordneten Wickelkopfs und in den Kurzschlussringen durch die elektromagnetische Auslegung der elektrischen Maschine zu beeinflussen. Desweiteren kann eine Feldstreuung als Beitrag zur gesamten magnetischen Streuung dadurch reduziert werden, dass die Anzahl der Stator- und Rotornuten ausreichend groß ist.

Ein weiterer Beitrag zur magnetischen Streuung stellt die Nutstreuung dar, die durch eine geeignete Anpassung der Nutgeometrien des Stators 2 und des Läufers 4 reduziert werden kann. Insbesondere wurde festgestellt, dass, je kürzer und breiter eine Statornut 23 ist, desto niedriger ist die Nutstreuung. Das Gleiche gilt auch für die Läufernuten bzw. die Abmessungen des Querschnitts der Kurzschlusswicklungen 43.

Breite Nuten besitzen jedoch den Nachteil, dass die Breite der die Nut bildenden Zähne, die den magnetischen Fluss führen sollen, kleiner wird, dadurch den Fluss begrenzt und das maximale Drehmoment bei geringen Drehzahlen begrenzt. Vorteilhaft ist jedoch, dass kurze Nuten eine Erhöhung der Jochbreite ermöglichen, was zu einer magnetischen Entlastung des Joches führt.

Insbesondere wurde festgestellt, dass durch eine besonders geringe magnetische Streuung sich bei einer Jochhöhe hy1 des Statorjochs 21 zur radialen Nuthöhe hn1 der Statornuten 23 von zwischen 1,75 und 2,5, vorzugsweise zwischen 2 und 2,25, besonders geringe Nutstreuungen ohne nennenswerte Begrenzung des maximalen Drehmomennts erreichen lassen.

Weiterhin kann ein Verhältnis einer Jochhöhe hy2 des Läuferkörpers 41 in radialer Richtung zur Nuthöhe hn2 der Läufernuten in radialer Richtung von zwischen 2 und 2,75, vorzugsweise zwischen 2,2 und 2,5, ebenfalls besonders geringe magnetische Nutstreuungen hervorrufen. Die Nuthöhe hn2 der Läufernuten entspricht im Wesentlichen der radialen Breite der Kurzschlusswicklungen 43 im Läufer 4.

Insbesondere die Kombination der obigen Auslegungen für den Stator 2 und den Läufer 4 ermöglichen Asynchronmotoren mit einer deutlich reduzierten Nutstreuung.

In radialer Richtung kurze Statornuten 23 bewirken, dass sich die verfügbare Nutfläche verringert. Dies kann durch eine Erhöhung der Nutfüllung, d.h. des Anteils des sich in der Statornut 22 befindenden Leiterquerschnitts im Verhältnis zur Gesamtquerschnittsfläche der Statornut 22, kompensiert werden. Insbesondere werden Nutwände 25 der mit den Statorspulen versehenen Statornut 22 im Wesentlichen parallel angeordnet. Dadurch kann die Nutfüllung der Statornut 22 gesteigert werden und somit die Erhöhung der Verluste, die aufgrund der kürzeren radialen Nutlänge der Statornuten 22 auftreten können, kompensiert werden.

Insbesondere sollte das Verhältnis an der Nutbreite nblder Statornut unmittelbar an Zahnköpfen 26 der Statorzähne 22 zu der Nutbreite nb2 am Nutgrund zwischen 0,9 und 1,1 betragen.

Insbesondere kann die Asynchronmaschine 1 als dreiphasige Maschine ausgebildet sein. Weiterhin können mehrere Dreiphasensysteme vorgesehen sein, die zueinander um 0° oder 30° versetzt sind. Mehrere Dreiphasensysteme sind sinnvoll, falls ein einzelner Leistungsumrichter nicht den benötigten Strom bereitstellen kann.

## Patentansprüche

1. Elektrische Asynchronmaschine (1), insbesondere Induktionsmaschine, umfassend:
- einen zylindrischen Stator (2) mit an einem Statorjoch (21) angeordneten Statorzähnen (22);
- einen zylindrischen Läufer (4) mit an einem Läuferjoch angeordneten Läuferpolen (42), die durch Kurzschlusswicklungen in einem Läuferkörper (41) definiert sind, **dadurch gekennzeichnet, dass**
ein Verhältnis einer Jochhöhe (hy1) des Statorjochs (21) in radialer Richtung zu einer Nuthöhe (hn1) der Statornuten (23) in radialer Richtung zwischen 1,75 und 2,5 beträgt, wobei ein Verhältnis der Jochhöhe des Läuferkörpers (41) in radialer Richtung zur Nuthöhe der Läufernuten in radialer Richtung zwischen 2 und 2,75 beträgt.

2. Asynchronmaschine (1) nach Anspruch 1, wobei ein Verhältnis der Nutbreiten (nb1) des Bereichs der Statornuten (23), der an einen Zahnkopf der Statornut (23) angrenzt, zu der Nutbreite (nb2) am Nutgrund zwischen 0,9 und 1,1 beträgt.

3. Asynchronmaschine (1) nach einem der Ansprüche 1 und 2, wobei die Asynchronmaschine als dreiphasige Maschine ausgebildet ist.

4. Asynchronmaschine (1) nach Anspruch 3, wobei die Asynchronmaschine mehrere Dreiphasensysteme umfasst, die zueinander um 0° oder 30° versetzt sind.

5. Asynchronmaschine (1) nach einem der Ansprüche 1 bis 4, wobei die Kurzschlusswicklungen in Aluminium, Kupfer oder einem Material mit noch höherer Leitfähigkeit ausgeführt sind.

6. Asynchronmaschine (1) nach einem der Ansprüche 1 bis 5, wobei der Läuferkörper (21) durch Umspülen mit einem Kühlmedium, insbesondere Öl oder Luft, gekühlt ist.

## Claims

1. Electric asynchronous machine (1), in particular an induction machine, comprising:
- a cylindrical stator (2) having stator teeth (22) that are arranged on a stator yoke (21);
- a cylindrical rotor (4) having rotor poles (42) that are arranged on a rotor yoke, said rotor poles being defined by means of short-circuit windings in a rotor body (41), **characterized in that**
a ratio of a yoke height (hy1) of the stator yoke (21) in the radial direction with respect to a slot height (hn1) of the stator slots (23) in the radial direction is between 1.75 and 2.5, wherein a ratio of the yoke height of the rotor body (41) in the radial direction with respect to the slot height of the rotor slots in the radial direction is between 2 and 2.75.

2. Asynchronous machine (1) according to Claim 1, wherein a ratio of the slot widths (nb1) of the region of the stator slots (23) that is adjacent to a tooth tip of the stator slot (23) with respect to the slot width (nb2) at the slot base is between 0.9 and 1.1.

3. Asynchronous machine (1) according to either of Claims 1 and 2, wherein the asynchronous machine is embodied as a three-phase machine.

4. Asynchronous machine (1) according to Claim 3, wherein the asynchronous machine comprises multiple three-phase systems that are offset with respect to one another by 0° or 30°.

5. Asynchronous machine (1) according to any of Claims 1 to 4, wherein the short-circuit windings are produced from aluminum, copper or a material having an even higher magnitude of conductivity.

6. Asynchronous machine (1) according to any of Claims 1 to 5, wherein the rotor body (21) is cooled by means of a flushing procedure using a cooling agent, in particular oil or air.

## Revendications

1. Machine asynchrone électrique (1), en particulier machine à induction, comprenant :
- un stator cylindrique (2) avec des dents statoriques (22) disposées au niveau d'une culasse de stator (21) ;
- un induit cylindrique (4) avec des pôles d'induit (42) disposés sur une culasse d'induit, qui sont définis par des enroulements de court-circuit dans un corps d'induit (41),
**caractérisée en ce**
**qu'**un rapport d'une hauteur de culasse (hy1) de la culasse de stator (21) dans la direction radiale à une hauteur de rainure (hn1) des rainures de stator (23) dans la direction radiale est compris entre 1,75 et 2,5,
un rapport de la hauteur de culasse du corps d'induit (41) dans la direction radiale à la hauteur de rainure des rainures d'induit dans la direction radiale étant compris entre 2 et 2,75.

2. Machine asynchrone (1) selon la revendication 1, dans laquelle un rapport de la largeur de rainure (nb1) de la région des rainures de stator (23) qui est adjacente à une tête de dent de la rainure de stator (23), à la largeur de rainure (nb2) au niveau du fond de rainure est compris entre 0,9 et 1,1.

3. Machine asynchrone (1) selon l'une quelconque des revendications 1 et 2, la machine asynchrone étant réalisée sous forme de machine triphasée.

4. Machine asynchrone (1) selon la revendication 3, la machine asynchrone comprenant plusieurs systèmes triphasés qui sont décalés les uns par rapport aux autres de 0° ou de 30°.

5. Machine asynchrone (1) selon l'une quelconque des revendications 1 à 4, dans laquelle les enroulements de court-circuit sont réalisés en aluminium, en cuivre ou en un matériau ayant une conductibilité encore plus élevée.

6. Machine asynchrone (1) selon l'une quelconque des revendications 1 à 5, dans laquelle le corps d'induit (21) refroidi par circulation d'un réfrigérant, en particulier d'huile ou d'air.
